# EUROPÄISCHE PATENTSCHRIFT

(11) **EP 3 349 911 B1**
(45) Veröffentlichungstag und Bekanntmachung des Hinweises auf die Patenterteilung: **06.11.2019**
(21) Anmeldenummer: 16763232.2
(22) Anmeldetag: 01.09.2016
(51) Int. Cl.: B04B 1/20, B04B 9/08

(54) **KÜHLVORRICHTUNG FÜR EINEN ANTRIEB EINER VOLLMANTEL-SCHNECKENZENTRIFUGE**
COOLING DEVICE FOR A TRANSMISSION OF A SOLID BOWL SCREW CENTRIFUGE
DISPOSITIF REFROIDISSANT POUR UNE TRANSMISSION D'UNE CENTRIFUGEUSE À VIS À BOL PLEIN

(30) Priorität: 17.09.2015 DE 102015115720
(43) Veröffentlichungstag der Anmeldung: 25.07.2018
(73) Patentinhaber: GEA Mechanical Equipment GmbH, 59302 Oelde (DE)
(72) Erfinder: HERMELER, Jürgen, 48336 Sassenberg (DE); KNOSPE, Volker, 48167 Münster (DE); OVERBERG, Martin, 33442 Herzebrock-Clarholz (DE); TERHOLSEN, Stefan, 59302 Oelde (DE); KNOBEL, Andreas, 59302 Oelde (DE); DRIFTSCHROEER, Christian, 33129 Delbrück (DE)
(74) Vertreter: Specht, Peter
(86) Internationale Anmeldenummer: PCT/EP2016/070662
(87) Internationale Veröffentlichungsnummer: WO 2017/045929

(56) Entgegenhaltungen:
- DE-U1-202012 012 743
- US-A1- 2002 183 186

## Beschreibung

Die Erfindung betrifft eine Antriebsvorrichtung für eine Vollmantel-Schneckenzentrifuge, nach dem Oberbegriff des Anspruchs 1.

Eine Vollmantel-Schneckenzentrifuge - auch Dekanter genannt - ist aus der DE 10 2006 028 804 A1 bekannt. Während des Betriebes erwärmt sich das umlaufende Getriebe der Antriebsvorrichtung. Es ist insofern bekannt, Getriebekühleinrichtungen einzusetzen, mit welchen diesem Effekt entgegen gewirkt werden soll.

Als Getriebekühleinrichtungen sind zum einen externe Ölkühler bekannt. Das Öl wird dabei über eine Drehvorrichtung in das umlaufende Getriebe - welches wenigstens ein sich drehendes Getriebeaußenteil aufweist - geleitet und wieder herausgeführt. Weiterhin ist bekannt, dass man die Kühlung des Getriebes durch eine stärkere Luftumwälzung verbessern kann. Die Reibungskräfte der rotierenden Getriebeoberfläche werden dabei genutzt, um einen Luftstrom um das Getriebe zu erzeugen, mit dem die Luft an der Getriebeoberfläche von dieser weg radial nach außen geleitet wird.

Weiterhin sind Lösungen bekannt, bei denen das Getriebe mit einer Einhausung versehen wird. Axial wird über am rotierenden Getriebe angebrachte Flügel ein Luftstrom zur Kühlung erzeugt und in die Einhausung geleitet.

Eine gattungsgemäße Konstruktion zeigt die DE 20 2012 012 743 U1. Hier ist eine Haube beabstandet zu einem Getriebe drehfest über das Getriebe gestülpt.

Die Erfindung hat vor diesem Hintergrund die Aufgabe, dem Effekt einer Getriebeerwärmung an einem Getriebe einer Antriebsvorrichtung für eine Zentrifuge mit einfachen konstruktiven Mitteln entgegenzuwirken.

Die Erfindung löst diese Aufgabe durch den Gegenstand des Anspruchs 1. Die Erfindung schafft ferner eine Vollmantel-Schneckenzentrifuge nach Anspruch 17.

Mit der nach Art des Anspruchs 1 ausgestalteten Getriebekühleinrichtung wird der erzwungene konvektive Wärmeübergang vom Getriebe an die Umgebung auf einfache konstruktive Weise verbessert.

Nach einer vorteilhaften Weiterbildung, mit welcher der Kühleffekt weiter erhöht wird, sind mehrere der Luftleiteinrichtungen an dem Ringkörper ausgebildet.

Vorzugsweise weist der Ringkörper einen Ring oder mehrere Ringe auf, der/die vorzugsweise als radial ausgerichtete Ringscheiben ausgebildet sind. Diese Ringe lassen sich leicht an dem Getriebe befestigen und erlauben andererseits auf einfache Weise das Anbringen der Luftleiteinrichtungen. Die Ringe können zudem ergänzend selber zur Luftleitung genutzt werden.

Nach einer vorteilhaften Variante sind eine oder mehrere der Luftleiteinrichtungen zwischen zwei axial beabstandeten Ringen des Ringkörpers ausgebildet, wobei die eine oder mehreren zwischen den zwei axial beabstandeten Ringen des Ringkörpers ausgebildeten Luftleiteinrichtungen zum einen als Flügel wirken, die den Luftstrom in der Umgebung des Getriebes erhöhen und zum anderen luftleitend, indem sie den Luftstrom von radial weiter außen radial dichter an die Getriebeoberfläche heran führen. Insbesondere derart ist es möglich, dass eine oder mehrere der Luftleiteinrichtungen und die Ringe im montierten Zustand zusammen eine Hülle um das Getriebe bilden, die an einer oder mehreren Stellen radial weiter außen angeordnete Einlässe und vorzugsweise relativ dazu radial weiter innen liegende Auslässe aufweisen.

Vorzugsweise ist das Getriebe als Umlaufgetriebe bzw. umlaufendes Getriebe ausgebildet, was im Sinne dieser Anmeldung bedeutet, dass es wenigstens ein im Betrieb sich drehendes Getriebeaußenteil aufweist, also ein radial nach außen ganz oder teilweise frei liegendes Teil, mit welchem sich der Ringkörper im Betrieb in einer Drehrichtung dreht. Es wird ferner - z.B. radial weiter innen - weitere sich drehende Teile aufweisen.

Weitere vorteilhafte Ausgestaltungen der Erfindung sind den Unteransprüchen zu entnehmen.

Nachfolgend wird die Erfindung unter Bezug auf die Zeichnung anhand von Ausführungsbeispielen näher beschrieben. Es zeigt:
Fig. 1a und b zwei verschiedene perspektivische Ansichten einer Getriebekühleinrichtung für ein umlaufendes Getriebe für eine Antriebsvorrichtung für eine Vollmantel-Schneckenzentrifuge;
Fig. 2a-e verschiedene Ansichten eines Getriebes für eine Antriebsvorrichtung einer Vollmantel-Schneckenzentrifuge mit einer Getriebekühleinrichtung;
Fig. 3a und b zwei verschiedene perspektivische Ansichten einer weiteren Getriebekühleinrichtung für ein Getriebe einer Vollmantel-Schneckenzentrifuge;
Fig. 4a-e verschiedene Ansichten eines Getriebes für eine Antriebsvorrichtung einer Vollmantel-Schneckenzentrifuge mit einer Getriebekühleinrichtung; und
Fig. 5 eine schematische Darstellung einer bekannten Vollmantel-Schneckenzentrifuge mit einer Antriebsvorrichtung ohne eine Getriebekühleinrichtung.

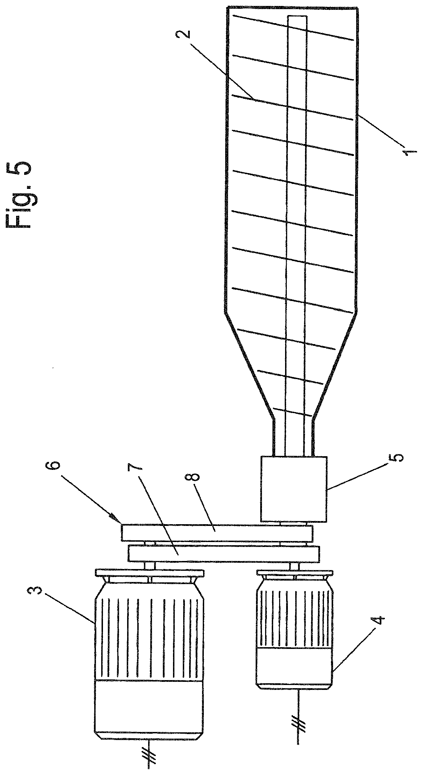

Fig. 5 zeigt eine Vollmantel-Schneckenzentrifuge - auch Dekanter genannt - mit einer drehbaren Trommel 1 mit einer vorzugsweise horizontalen Drehachse und einer innerhalb der Trommel 1 angeordneten, ebenfalls drehbaren Schnecke 2.

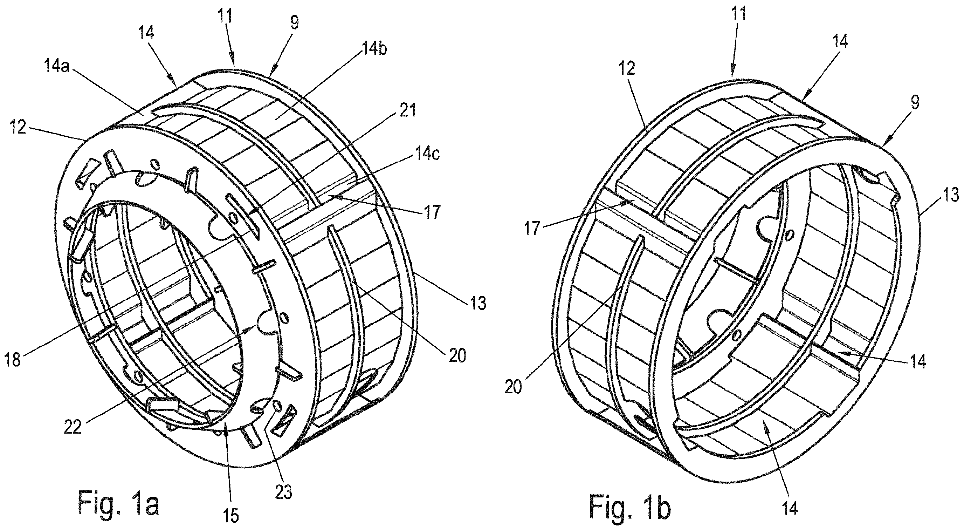

Die Trommel 1 der Figur 1 ist beispielhaft zwischen einem antriebsseitigen und einem antriebsabgewandten Trommellager (nicht dargestellt) angeordnet und mit diesen Trommellagern an einem (ebenfalls nicht dargestellten) Maschinengestell/Fundament drehbar gelagert. Details wie ein Zulauf für ein Produkt, ein Verteiler, und Produktauslässe sind in Fig. 1 nicht dargestellt, aber an sich bekannt. In der Vollmantel-Schneckenzentrifuge wird bei der Rotation der Trommel 1 ein zu verarbeitender Produkt in zwei oder drei Phasen getrennt, wobei eine Feststoffphase und wenigstens eine geklärte Flüssigkeitsphase anfallen. Ggf. kann die Flüssigkeitsphase ggf. auch in zwei oder mehr Flüssigkeitsphasen verschiedener Dichte getrennt werden.

Das zu verarbeitende Produkt(-gemisch) wird durch ein zentrales Rohr in die sich drehende Trommel 1 geleitet. In der Trommel 1 wird dieses Produkt von einer Feststoffphase oder einer wässrigen Phase geklärt. Die Feststoffphase muss entgegen der Fliehkraft der Partikel entlang der Schnecke 2 geschoben werden.

In der Trommel 1 ist daher die Schnecke 2 drehgelagert, die mit einer geringen Relativdrehzahl zur Trommel 1 gedreht wird. Derart bewirkt die Schnecke 2 die erforderliche Förderung des Feststoffes bzw. der Feststoffphase in Richtung eines Feststoffauslasses (in der Regel an einem konischen Ende der Trommel 1).

Zum Drehen der Trommel 1 und der Schecke 2 weist die Vollmantel-Schneckenzentrifuge ein Antriebssystem auf. Ein erster Antriebsmotor -Hauptmotor 3 genannt - dient primär zum Drehen der Trommel 1 und ein zweiter Antriebsmotor - Sekundärmotor 4 genannt - dient primär zur Erzeugung einer variablen Differenzdrehzahl zwischen der Trommel 1 und der Schnecke 2. Zwischen den Antriebsmotoren einerseits und der Trommel 1 und der Schnecke 2 andererseits kann ein Getriebe 5 vorgesehen sein. Dieses Getriebe 5 kann beispielsweise als ein Planetengetriebe mit einer oder mehreren Stufen ausgebildet sein. Es kann auch umlaufendes Kurvenscheibengetriebe sein. Eine solche Anordnung ist beispielsweise aus der gattungsgemäßen DE 10 2006 028 804 A1 bekannt.

Der Hauptmotor 3 ist über einen Riementrieb 6 mit hier beispielhaft zwei Riemen 7, 8 mit dem Getriebe 5 und der Trommel 1 verbunden. Der Hauptmotor 3 dient zur Einspeisung der Abwurfleistung für geklärtes Fluid und den Feststoff und stellt die Leerlaufleistung bereit. Das im Betrieb auftretende Drehmoment zwischen der Schnecke 2 und der Trommel 1 wird hier über das Getriebe 5 erzeugt. Die benötigte Leistung für die Feststoffförderung - also der variablen Differenzdrehzahl zwischen der Trommel 1 und der Schnecke 2 - wird über den Sekundärmotor 4 in das Getriebe 5 eingespeist.

Der Hauptmotor 3 und der Sekundärmotor 4 werden - vorzugsweise jeweils über ihnen vorgeschaltete - hier nicht dargestellte Frequenzumrichter - an ein Wechselspannungsnetz - in der Regel ein Dreiphasen-Drehstromnetz angeschlossen und derart mit elektrischer Energie versorgt.

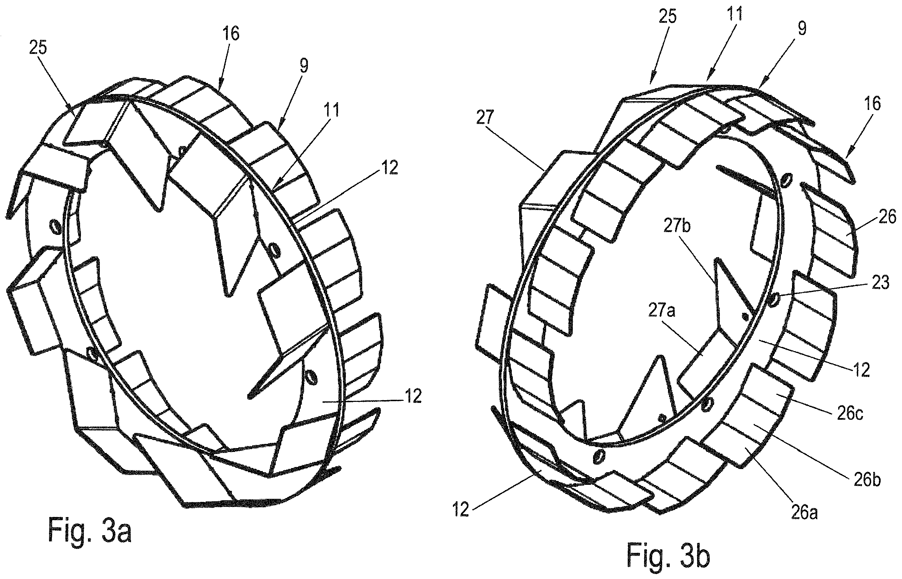

Im Betrieb erwärmt sich das Getriebe 5 auf Grund von Flankenreibung, Lager- und Dichtungsreibung und Plantschverlusten. Um diesem Effekt entgegenzuwirken, wird das Getriebe 5 - vorzugsweise ein Planetengetriebe - mit einer Getriebekühleinrichtung 9 (Fig.1a, b; Fig.3a, b) gekühlt.

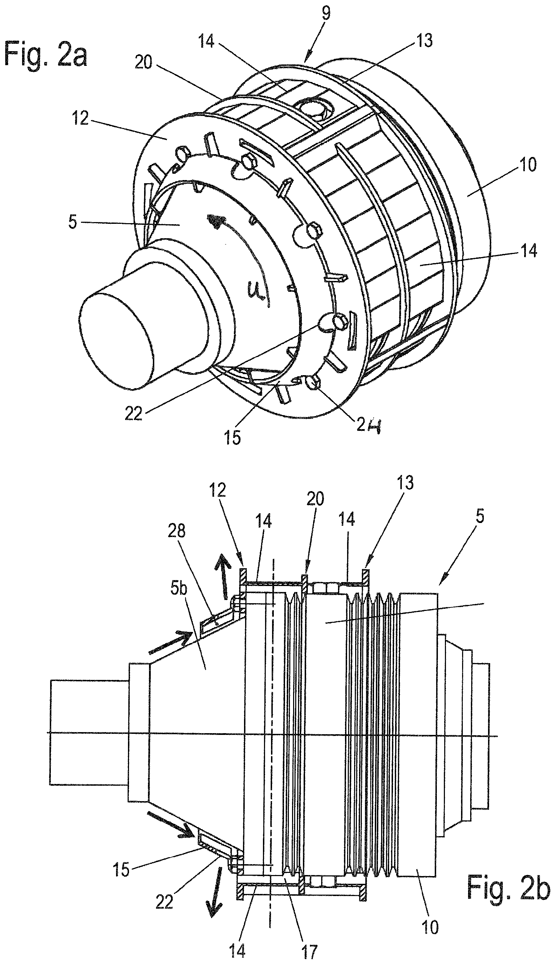

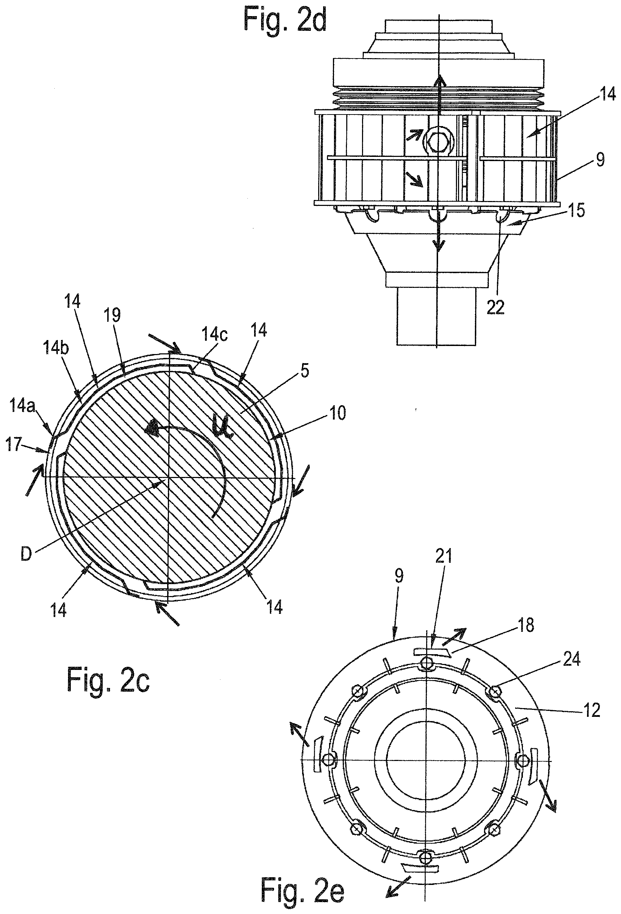

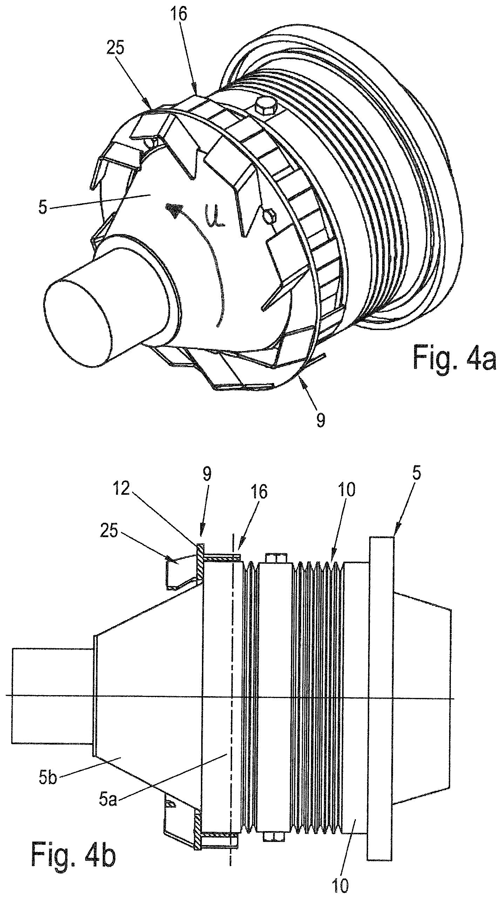

Das Getriebe 5 weist - siehe auch Fig. 2b oder Fig. 4b - ein sich im Betrieb in einer Drehrichtung U drehendes Getriebeaußenteil 10 auf. Die Getriebekühleinrichtung 9 ist im Wesentlichen außen auf dieses sich drehende Getriebeaußenteil 10 des Getriebes 5 aufgesetzt und umgibt es konzentrisch über einen Teil seiner axialen Erstreckung (nicht dort, wo Antriebsriemen vorgesehen sind). Die Drehachse, auf die sich nachfolgend die Begriffe "radial" und "axial" beziehen, ist in Fig. 2c mit D bezeichnet und erstreckt sich senkrecht zu der Ebene der Fig. 2c.

Nach Fig. 1 und 2 ist die Getriebekühleinrichtung 9 als ein Ringkörper 11 ausgebildet, der an das Getriebe gesetzt ist und das Getriebeaußenteil 10 des Getriebes 5 außen wenigstens abschnittsweise umgibt bzw. sogar vorzugsweise einhüllt.

Der Ringkörper 11 weist wenigstens einen Ring 12 - siehe Fig. 3 - oder - siehe Fig. 1 - zwei oder mehr axial beabstandete Ringe 12, 13 auf, an denen wenigstens eine oder mehrere Luftleiteinrichtungen 14, 15, 16, 25 ausgebildet, insbesondere montiert, sind. Die Ringe 12, 13 sind als radial ausgerichtete Ringscheiben ausgebildet, die an Bohrungen 23 am Getriebe 5 mit Schrauben 24 (Fig. 1a bzw. 2a) oder dgl. z.B. an einem Axialabschnitt des Getriebes montierbar sind. Es sind aber auch andere alternative Arten der Befestigung am Getriebe 5 denkbar.

Es ist bevorzugt und konstruktiv einfach realisierbar, dass eines oder mehrere Bleche die Luftleiteinrichtungen 14, 15, 16, 25 bilden. Nach Fig. 1 sind die Luftleiteinrichtungen 14 jeweils einstückig durch Biegen aus ausgeschnittenen Blechstreifen gebildet. Diese sind an dem einen Ring 12 oder an mehreren der Ringe 12, 13 befestigt.

Die Luftleiteinrichtungen 14, 15, 16, 25 der Fig. 1 und der Fig. 3 sind derart ausgestaltet und ausgerichtet, dass sie Luft von radial weiter außen radial näher an die Oberfläche des Getriebes 5 führen. Die Luftleiteinrichtungen 14, 16, 25 wirken dabei zum einen als Flügel, die den Luftstrom in der Umgebung des Getriebes 5 erhöhen und leiten diesen jedenfalls zum überwiegenden Teil aufgrund ihrer Geometrie von radial weiter außen radial dichter an die Getriebeoberfläche heran, bis er von dort wieder abströmt.

Die eine oder mehreren Luftleiteinrichtungen 14, 15, 16, 25 können jeweils einstückig ausgebildet sein oder mehrstückig. Sie sind an dem Ring 12 (Fig. 3) oder den Ringen 12, 13 sowie nach Fig. 1 zwischen den Ringen 12, 13 befestigt. Nach Fig. 1 bilden die Luftleiteinrichtungen 14 und die Ringe 12, 13 im Zusammenspiel eine Art Hülle um das Getriebe 5, hier das sich drehende Getriebeteil 10, die an mehreren Stellen in nachfolgend zu erörternder Weise Einlässe 17 und Auslässe 18 aufweist.

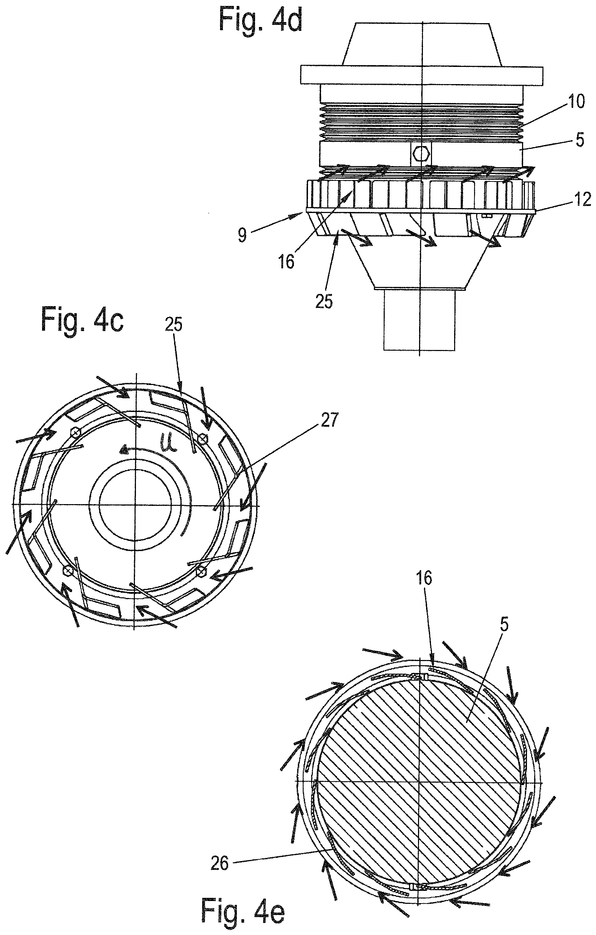

Nach Fig. 1 und 2 weist die Getriebekühleinrichtung 9 umfangsverteilt zwischen den beiden Ringen 12, 13 eine oder vorzugsweise mehrere - in Fig. 1 vier - der Luftleiteinrichtungen 14 auf. Diese sind derart geformt, dass sie bei Drehungen des Getriebes 5 Luft jeweils in einem äußeren schaufelartigen Luftsammelbereich 14a an dem jeweiligen Einlass 17 radial nach innen zur Getriebeaußenoberfläche hin leiten, wo die Luft in einem Spalt 19 zwischen der Getriebeaußenoberfläche und einem Umfangsluftleitbereich 14b in Umfangsrichtung weitergeleitet wird, bis die Luft jeweils vor einem Radialabschnitt 14c, welcher vorzugsweise die Getriebeaußenoberfläche berührt oder fast berührt, in Umfangsrichtung am Weiterströmen gehindert wird. Diese Luft kann sodann durch axiale Durchbrechungen oder Aussparungen 21 - die hier die Auslässe 18 bilden - in den Ringen 12, 13 axial entweichen. Die Auslässe 18 liegen radial weiter innen als die Einlässe 17 (der Luftstrom ist durch dickere schwarze Pfeile in Fig. 2 und 4 dargestellt).

Im Prinzip wird nach Fig. 1 und 2 eine Art vorzugsweise nahezu geschlossene Hülle um das Getriebe 5 gebildet, die aber an einigen Umfangspositionen die Öffnungen bzw. Einlässe 17 und Auslässe 18 aufweist, wobei sich aber ähnlich zu einem Pitot-Rohr-Effekt Luft aufstaut und durch den Spalt 19 zwischen Getriebe 5 und Hülle geleitet wird.

Die Luftleiteinrichtungen 14 können in Umfangsrichtung beispielsweise mit einem weiteren Ring 20, der axial zwischen den Ringen 12, 13 liegt, stabilisiert werden. Die Luftleiteinrichtungen 14 wirken insbesondere in einem hinsichtlich der Außenkontur ganz oder weitgehend zylindrischem Getriebebereich 5a.

An einem der beiden Ringe 12, 13 ist eine weitere - hier ebenfalls konisch geformte - Luftleiteinrichtung 15 vorgesehen, die als konischer Blechring ausgebildet ist. Derart wird ein konischer Spalt 28 (Fig. 2b) zwischen dem Getriebe 5 und der Luftleiteinrichtung 15 mit wenigstens einem Einlass und wenigstens einem Auslass ausgebildet. Zum Ring 12 hin weist die Luftleiteinrichtung 15 eines oder mehrere Fenster oder Aussparungen 22 als Auslässe auf. Derart wird hier Luft durch den Spalt 28 gesaugt, die radial nach außen durch die Fenster oder Aussparungen 22 als Auslässe entweichen kann (Fig. 2b). Diese optionale Luftleiteinrichtung 15 bläst die Luft anders als die Luftleiteinrichtungen 14, 16, 25 auch radial an die hier konische Oberfläche heran. Sie wirkt ergänzend kühlend in dem konischen Getriebebereich 5b und ist daher vorteilhaft.

Nach Fig. 3a, b bzw. 4a -e ist an der Getriebekühleinrichtung 9, die wiederum als Ringkörper 11 ausgebildet ist, nur einer der Ringe 12 vorgesehen. Dieser Ring 12 ist wiederum nach Art sich radial erstreckenden Ringscheibe ausgebildet. An den beiden Axialseiten dieses Ringes 12 sind die Luftleiteinrichtungen 16 und 25 ausgebildet. Diese Luftleiteinrichtungen 16 und 25 weisen jeweils eine Mehrzahl an den beiden Seiten des Ringes 12 umfangsverteilt angeordneter Luftleitbleche 26, 27 auf. Diese Luftleitbleche 26, 27 weisen wiederum jeweils wenigstens einen mehr in Umfangsrichtung bzw. mehr tangential ausgerichteten Abschnitt 26a, 27a auf und wenigstens einen oder mehrere sich daran anschließende weiter in Radialrichtung gebogene Abschnitte 26b, c; 27b. Derart wird Luft im Betrieb weiter von außen nach innen an das Getriebe heran geleitet. Die Luftleitbleche 26 der Luftleiteinrichtung 16 erstrecken sich an einem Ende radial bis an die Oberfläche des rotierenden Getriebeteils 10 heran (Fig. 4e). Derart wird wieder eine Art Hülle gebildet, wobei die Rotation durch die Umgebungsluft im Wesentlichen nur die Luftleitbleche 26 als Hülle erwärmt. Die zum rotierenden Getriebeteil 10 geleitete Luft staut sich vor der Oberfläche und strömt seitlich axial ab, so dass die Getriebeoberfläche auch durch den sich derart bildenden Luftstrom gekühlt wird.

Die Luftleiteinrichtungen 16 sind dabei dazu vorgesehen, Luft in den eher zylindrischen Getriebebereich 5a des Getriebes 5 zu leiten und die Luftleiteinrichtungen 25 dazu, Luft in den eher konischen Getriebebereich 5b des Getriebes 5 zu leiten. Es wird wieder Luft radial von außen nach innen zum Getriebe 5 geleitet, wobei die Luft axial seitlich aus den Luftleiteinrichtungen 16, 26 am Außenumfang des Getriebes 5 entweichen kann (siehe Fig. 4a - e).

**Bezugszeichen**

| | |
|---|---|
| Trommel | 1 |
| Schnecke | 2 |
| Hauptmotor | 3 |
| Sekundärmotor | 4 |
| Getriebe | 5 |
| zylindrischer Getriebebereich | 5a |
| konischer Getriebebereich | 5b |
| Riementrieb | 6 |
| Riemen | 7, 8 |
| Getriebekühleinrichtung | 9 |
| Getriebeaußenteil | 10 |
| Ringkörper | 11 |
| Ringe | 12, 13 |
| Luftleiteinrichtungen | 14, 15, 16 |
| Luftsammelbereich | 14a |
| Umfangsluftleitbereich | 14b |
| Radialabschnitt | 14c |
| Einlässe | 17 |
| Auslässe | 18 |
| Spalt | 19 |
| Ring | 20 |
| Aussparungen | 21 |
| Aussparungen | 22 |
| Bohrungen | 23 |
| Schrauben | 24 |
| Luftleiteinrichtungen | 25 |
| Luftleitbleche | 26, 27 |
| Abschnitt | 26a, 27a; 26b, 27b; 27c |
| Spalt | 28 |
| Drehachse | D |
| Drehrichtung | U |

## Patentansprüche

1. Antriebsvorrichtung für eine Vollmantel-Schneckenzentrifuge, mit
a. zumindest einem Motor zum Drehen einer Trommel (1) der Vollmantel-Schneckenzentrifuge,
b. einem zwischen Motor und Trommel (1) geschalteten Getriebe (5),
c. einer Kühleinrichtung zum Kühlen des Getriebes (5) im Betrieb bei Drehungen der Trommel (1),
d. wobei die Kühleinrichtung (9) als ein Ringkörper (11) ausgebildet ist, der wenigstens eine Luftleiteinrichtung (14, 15, 16, 25) aufweist, die dazu ausgelegt ist, Luft radial nach innen an eine Oberfläche des Getriebes (5) zu leiten,
**dadurch gekennzeichnet, dass**
e. der Ringkörper (11) auf das Getriebe (5) aufgesetzt ist und an dem Getriebe (5) befestigt ist

2. Antriebsvorrichtung nach Anspruch 1, **dadurch gekennzeichnet, dass** mehrere der Luftleiteinrichtungen (14, 15, 16, 25) an dem Ringkörper (11) ausgebildet sind.

3. Antriebsvorrichtung nach Anspruch 1 oder 2, **dadurch gekennzeichnet, dass** der Ringkörper einen Ring (12) oder mehrere Ringe (12, 13) aufweist, der/die vorzugsweise als radial ausgerichtete Ringscheiben ausgebildet sind.

4. Antriebsvorrichtung nach Anspruch 3, **dadurch gekennzeichnet, dass** mehrere der Luftleiteinrichtungen (14, 15, 16, 25) zwischen zwei axial beabstandeten Ringen (12, 13) des Ringkörpers (11) ausgebildet sind.

5. Antriebsvorrichtung nach Anspruch 4, **dadurch gekennzeichnet, dass** die mehreren zwischen zwei axial beabstandeten Ringen (12, 13) des Ringkörpers ausgebildeten Luftleiteinrichtungen (14, 15, 16, 25) zum einen als Flügel wirken, die den Luftstrom in der Umgebung des Getriebes (5) erhöhen und zum anderen luftleitend, indem sie den Luftstrom von radial weiter außen radial dichter an die Getriebeoberfläche heran führen.

6. Antriebsvorrichtung nach einem der Ansprüche 4, 5, **dadurch gekennzeichnet, dass** eine oder mehrere der Luftleiteinrichtungen (14) und zumindest zwei der Ringe (12, 13) im montierten Zustand zusammen eine Hülle um das Getriebe (5) bilden, die an einer oder mehreren Stellen radial weiter außen angeordnete Einlässe (17) und relativ dazu radial weiter innen liegende Auslässe (18) aufweist.

7. Antriebsvorrichtung nach einem der vorstehenden Ansprüche, **dadurch gekennzeichnet, dass** die Luftleiteinrichtungen (14) derart geformt sind, dass sie bei Drehungen des Getriebes (5) Luft an dem Einlass (17) in einem äußeren schaufelartigen Luftsammelbereich (14a) radial nach innen zur Getriebeoberfläche hin leiten, wo die Luft in einem Spalt (19) zwischen der Getriebeoberfläche und einem Umfangsluftleitbereich (14b) in Umfangsrichtung weitergeleitet wird, bis sie vor einem Radialabschnitt (14c), der sich vorzugsweise bis an die Oberfläche des Getriebes (5) erstreckt, axial aus dem Ringkörper (11) entweicht.

8. Antriebsvorrichtung nach einem der vorstehenden Ansprüche, **dadurch gekennzeichnet, dass** axiale Durchbrechungen oder Aussparungen (21) in einem der Ringe (12) oder den Ringen (12, 13) vorgesehen sind, durch welche Luft axial aus dem Ringkörper (11) entweichen kann.

9. Antriebsvorrichtung nach einem der vorstehenden Ansprüche, **dadurch gekennzeichnet, dass** an der Getriebekühleinrichtung (9), die als Ringkörper (11) ausgebildet ist, nur einer der Ringe (12) vorgesehen ist und dass an einer oder beiden Axialseiten dieses Ringes (12) die Luftleiteinrichtungen (16 und 25) ausgebildet sind.

10. Antriebsvorrichtung nach einem der vorstehenden Ansprüche, **dadurch gekennzeichnet, dass** die eine Luftleiteinrichtung (16) oder die beiden Luftleiteinrichtungen (16 und 25) jeweils eine Mehrzahl an der einen oder den beiden Axialseiten des Ringes (12) umfangsverteilt angeordnete Luftleitbleche (26, 27) aufweisen.

11. Antriebsvorrichtung nach Anspruch 10, **dadurch gekennzeichnet, dass** die Luftleitbleche (26, 27) jeweils wenigstens einen mehr in Umfangsrichtung bzw. mehr tangential ausgerichteten Abschnitt (26a, 27a) aufweisen und wenigstens einen oder mehrere sich daran anschließende weiter in Radialrichtung gebogene Abschnitte (26b, c; 27b), um Luft im Betrieb weiter von außen nach innen an eine Oberfläche des Getriebes (5) heran zu leiten.

12. Antriebsvorrichtung nach einem der Ansprüche 10, 11, **dadurch gekennzeichnet, dass** sich die Luftleitbleche (26, 27) mit den weiter in Radialrichtung gebogenen Abschnitten (26b, c; 27b) bis unmittelbar an die Oberfläche des Getriebes (5) heran erstrecken.

13. Antriebsvorrichtung nach einem der vorstehenden Ansprüche, **dadurch gekennzeichnet, dass** das Getriebe konfiguriert ist, um zwischen einen Hauptmotor (3) und einen Sekundärmotor (4) einerseits und die Trommel (1) und eine Schnecke (2) andererseits einer Vollmantel-Schneckenzentrifuge geschaltet zu werden.

14. Antriebsvorrichtung nach einem der vorstehenden Ansprüche, **dadurch gekennzeichnet, dass** die eine oder wenigstens eine weitere der Luftleiteinrichtungen (15) als konischer Blechring ausgebildet ist, so dass ein konischer Spalt (28) zwischen dem Getriebe (5) und der Luftleiteinrichtung (15) ausgebildet ist, wobei diese Luftleiteinrichtung Luft durch den Spalt (28) leitet.

15. Antriebsvorrichtung nach einem der vorstehenden Ansprüche, **dadurch gekennzeichnet, dass** das Getriebe als Umlaufgetriebe ausgebildet ist.

16. Antriebsvorrichtung nach einem der vorstehenden Ansprüche, **dadurch gekennzeichnet, dass** das umlaufende Getriebe als Planetengetriebe ausgebildet ist.

17. Vollmantel-Schneckenzentrifuge mit einer Antriebsvorrichtung nach einem der vorstehenden Ansprüche, wobei das Getriebe zwischen einen Hauptmotor (3) und einen Sekundärmotor (4) einerseits und die Trommel (1) und eine Schnecke (2) andererseits einer Vollmantel-Schneckenzentrifuge geschaltet ist.

## Claims

1. A drive device for a solid bowl screw centrifuge, with
a. at least one motor for rotating a drum (1) of the solid bowl screw centrifuge,
b. a transmission (5) connected between motor and drum (1),
c. a cooling device for cooling the transmission (5) in operation during rotations of the drum (1),
d. wherein the cooling device (9) is designed as an annular body (11), which has at least one air guiding device (14, 15, 16, 25) which is designed for the purpose of directing air radially inward onto a surface of the transmission (5),
**characterized in that**
e. the annular body (11) is mounted on the transmission (5) and fastened on the transmission (5).

2. The drive device as claimed in claim 1, **characterized in that** a plurality of the air guiding devices (14, 15,16, 25) are formed on the annular body (11).

3. The drive device as claimed in either of claims 1 and 2, **characterized in that** the annular body has a ring (12) or a plurality of rings (12, 13) which is/are preferably designed as (a) radially oriented annular disk(s).

4. The drive device as claimed in claim 3, **characterized in that** a plurality of the air guiding devices (14, 15, 16, 25) are formed between two axially spaced apart rings (12, 13) of the annular body (11).

5. The drive device as claimed in claim 4, **characterized in that** the plurality of air guiding devices (14, 15, 16, 25) which are formed between two axially spaced apart rings (12, 13) of the annular body (11) act as vanes on the one hand which increase the airflow in the surroundings of the transmission (5) and on the other hand act with air guiding effect by them guiding the airflow from radially farther on the outside to radially closer to the transmission surface.

6. The drive device as claimed in one of the claims 4, 5, **characterized in that** one or more of the air guiding devices (14) and at least two of the rings (12, 13) in the installed state together form a casing around the transmission (5) which at one or more points has inlets (17) which are arranged radially more toward the outside and outlets (18) which lie radially more toward the inside in relation thereto.

7. The drive device as claimed in one of the preceding claims, **characterized in that** the air guiding devices (14) are formed in such a way that during rotations of the transmission (5) they direct air at the inlet (17) in an outer vane-like air collecting region (14a) radially inward toward the transmission surface where, in a gap (19) between the transmission surface and a circumferential air guiding region (14b), the air is further guided in the circumferential direction until it escapes axially from the annular body (11) in front of a radial section (14c) which preferably extends to the surface of the transmission (5).

8. The drive device as claimed in one of the preceding claims, **characterized in that** provision is made in one of the rings (12) or in the rings (12, 13) for axial breakthroughs or cutouts (21) through which air can escape axially from the annular body (11).

9. The drive device as claimed in one of the preceding claims, **characterized in that** provision is made on the transmission cooling device (9), which is designed as an annular body (11), for only one of the rings (12), and **in that** the air guiding devices (16 and 25) are formed on one or both axial sides of this ring (12).

10. The drive device as claimed in one of the preceding claims, **characterized in that** the one air guiding device (16) or the two air guiding devices (16 and 25) have in each case a multiplicity of air deflection plates (26, 27) which are arranged in a circumferentially distributed manner on the one side or both axial sides of the ring (12).

11. The drive device as claimed in Claim 10, **characterized in that** the air deflection plates (26, 27) have in each case at least one section (26a, 27a) which is oriented more in the circumferential direction or more in the tangential direction and, adjoining these, at least one or more sections (26b, c; 27b) which are bent further in the radial direction in order to direct air during operation further from the outside inward onto the surface of the transmission (5).

12. The drive device as claimed in one of the claims 10, 11, **characterized in that** the air deflection plates (26, 27) with the sections (26b, c; 27b) which are bent further in the radial direction extend directly up to the surface of the transmission (5).

13. The drive device as claimed in one of the preceding claims, **characterized in that** the transmission is configured to be connected between a main motor (3) and a secondary motor (4) on one side and between the drum (1) and a screw (2) on the other side of a solid bowl screw centrifuge.

14. The drive device as claimed in one of the preceding claims, **characterized in that** the one or at least one further of the air guiding devices (15) is designed as a conical sheet metal ring so that a conical gap (28) is formed between the transmission (5) and the air guiding device (15), wherein this air guiding device directs air through the gap (28).

15. The drive device as claimed in one of the preceding claims, **characterized in that** the transmission is designed as an orbiting transmission.

16. The drive device as claimed in one of the preceding claims, **characterized in that** the orbiting transmission is designed as a planetary transmission.

17. A solid bowl screw centrifuge with a drive device as in one of the preceding claims, wherein the transmission is connected between a main motor (3) and a secondary motor (4) on one side and between the drum (1) and screw (2) on the other side of a solid bowl screw centrifuge.

## Revendications

1. Dispositif d'entraînement pour une centrifugeuse à vis à bol plein, avec
a. au moins un moteur pour entraîner en rotation un tambour (1) de la centrifugeuse à vis à bol plein,
b. un engrenage (5) intercalé entre le moteur et le tambour (1),
c. une installation de refroidissement pour refroidir l'engrenage (5) en fonctionnement pendant la rotation du tambour (1),
d. l'installation de refroidissement (9) étant conformée comme un corps annulaire (11) qui présente au moins une installation de guidage de l'air (14, 15, 16, 25) conçue pour guider l'air dans le sens radial vers l'intérieur sur une surface de l'engrenage (5),
**caractérisé en ce que**
e. le corps annulaire (11) est posé sur l'engrenage (5) et fixé sur l'engrenage (5).

2. Dispositif d'entraînement selon la revendication 1, **caractérisé en ce que** plusieurs des installations de guidage de l'air (14, 15, 16, 25) sont formées sur le corps annulaire (11).

3. Dispositif d'entraînement selon la revendication 1 ou 2, **caractérisé en ce que** le corps annulaire comporte un anneau (12) ou plusieurs anneaux (12, 13), qui est ou sont conformés de préférence comme des disques annulaires orientés dans le sens radial.

4. Dispositif d'entraînement selon la revendication 3, **caractérisé en ce que** plusieurs des installations de guidage de l'air (14, 15, 16, 25) sont formées entre deux anneaux (12, 13) du corps annulaire (11) écartés dans le sens axial.

5. Dispositif d'entraînement selon la revendication 4, **caractérisé en ce que** les plusieurs installations de guidage de l'air (14, 15, 16, 25) formées entre deux anneaux (12, 13) écartés du corps annulaire écartés dans le sens axial servent, d'une part, d'ailettes augmentant l'écoulement de l'air au voisinage de l'engrenage (5) et, d'autre part, guident l'air en amenant l'écoulement d'air provenant du côté radial plus loin vers l'extérieur dans le sens radial en passant plus près de la surface de l'engrenage.

6. Dispositif d'entraînement selon l'une des revendications 4, 5, **caractérisé en ce qu'**une ou plusieurs des installations de guidage de l'air (14) et au moins deux des anneaux (12, 13) forment ensemble, dans l'état monté, une enveloppe entourant l'engrenage (5), qui présente en un ou plusieurs endroits des entrées (17) disposées plus loin vers l'extérieur dans le sens radial et des sorties (18) disposées plus loin vers l'intérieur que celles-ci dans le sens radial.

7. Dispositif d'entraînement selon l'une des revendications précédentes, **caractérisé en ce que** les installations de guidage de l'air (14) sont formées de telle manière que lors des rotations de l'engrenage (5), elles guident l'air à l'entrée (17) dans une zone d'accumulation d'air (14a) en forme d'aube et vers l'intérieur dans le sens radial vers la surface de l'engrenage, où l'air est guidé dans le sens de la circonférence dans une fente (19) entre la surface de l'engrenage et une zone de guidage d'air de circonférence (14b) jusqu'à ce qu'il s'échappe du corps annulaire (11) dans le sens axial devant une partie radiale (14c) qui s'étend de préférence jusqu'à la surface de l'engrenage (5).

8. Dispositif d'entraînement selon l'une des revendications précédentes, **caractérisé en ce que** sont prévues dans l'un des anneaux (12) ou dans les anneaux (12, 13) des ouvertures ou découpes axiales (21) à travers lesquelles de l'air peut s'échapper du corps annulaire (11) dans le sens axial.

9. Dispositif d'entraînement selon l'une des revendications précédentes, **caractérisé en ce qu'**un seul des anneaux (12) est prévu sur l'installation de refroidissement de l'engrenage (9), qui est conformée comme un corps annulaire (11), et **en ce que** les installations de guidage de l'air (16 et 25) sont formées sur une ou les deux faces axiales de cet anneau (12).

10. Dispositif d'entraînement selon l'une des revendications précédentes, **caractérisé en ce qu'**une installation de guidage de l'air (16) ou les deux installations de guidage de l'air (16 et 25) présentent chacune un grand nombre de tôles de guidage de l'air (26, 27) réparties sur la circonférence sur une ou les deux faces axiales de l'anneau (12).

11. Dispositif d'entraînement selon la revendication 10, **caractérisé en ce que** les tôles de guidage de l'air (26, 27) présentent chacune au moins une partie (26a, 27a) orientée davantage dans le sens de la circonférence ou davantage tangentiellement et au moins une ou plusieurs parties (26b, c ; 27b) courbées davantage dans le sens radial qui leur font suite, pour guider l'air, en fonctionnement, plus loin de l'extérieur vers l'intérieur en passant sur une surface de l'engrenage (5).

12. Dispositif d'entraînement selon l'une des revendications 10, 11, **caractérisé en ce que** les tôles de guidage de l'air (26, 27) s'étendent avec les parties courbées davantage dans le sens radial (26b, c ; 27b) jusque immédiatement devant la surface de l'engrenage (5).

13. Dispositif d'entraînement selon l'une des revendications précédentes, **caractérisé en ce que** l'engrenage est configuré pour être monté entre un moteur principal (3) et un moteur secondaire (4), d'une part, et le tambour (1) et une vis sans fin (2), d'autre part, d'une centrifugeuse à vis à bol plein.

14. Dispositif d'entraînement selon l'une des revendications précédentes, **caractérisé en ce qu'**une ou au moins une autre des installations de guidage de l'air (15) est conformée comme un anneau de tôle conique, de sorte qu'un interstice conique (28) est formé entre l'engrenage (5) et l'installation de guidage de l'air (15), cette installation de guidage de l'air guidant l'air à travers l'interstice (28).

15. Dispositif d'entraînement selon l'une des revendications précédentes, **caractérisé en ce que** l'engrenage est conformé comme un engrenage épicycloïdal.

16. Dispositif d'entraînement selon l'une des revendications précédentes, **caractérisé en ce que** l'engrenage épicycloïdal est conformé comme un engrenage à train planétaire.

17. Centrifugeuse à vis à bol plein avec un dispositif d'entraînement selon l'une des revendications précédentes, dans lequel l'engrenage est monté entre un moteur principal (3) et un moteur secondaire (4), d'une part, et le tambour (1) et une vis sans fin (2), d'autre part, d'une centrifugeuse à vis à bol plein.
